# EUROPEAN PATENT APPLICATION

(11) **EP 1 447 163 A1**
(43) Date of publication of application: **18.08.2004**
(21) Application number: 04380032.5
(22) Date of filing: 12.02.2004
(51) Int. Cl.: B23B 49/02

(54) **Anti-sliding hand held drill guide tool**

(30) Priority: 13.02.2003 ES 200300364 U; 19.05.2003 ES 200301217 U
(71) Applicant: Canas Fontan, Jose Guillermo, 36350 Nigran (ES)
(72) Inventor: Canas Fontan, Jose Guillermo, 36350 Nigran (ES)
(74) Representative: De Arpe Fernandez, Manuel

(57) **Abstract**

In order to prevent a drilling machine bit from moving from the point of application and keeping it exactly perpendicular to the object to be drilled when making the drill hole and thus achieve drill holes with entrance orifices perfectly fitting the size of the drill bit used, a tool is provided (11, 21) which has a rigid hand held part (12, 22) in the shape of a cylindrical piece, with a grip surface (120, 220) and a central cylindrical borehole (121, 221) which extends the whole length of its axis, as well as multiple cylindrical holes (122-129, 222-229) of different sizes extending parallel around the said central cylindrical borehole (121, 221) and a support part (13, 23) for supporting on the surface to be drilled made of a anti-sliding and elastic material, and the said hand held (12, 22) and support (13, 23) parts are soundly joined together, especially against rotation.

## Description

This invention refers to a anti-sliding hand held drill guide tool for drilling holes with drilling machine.

### TECHNICAL FIELD

This invention refers to a hand held guide tool for preventing the point of application of a drilling machine bit from moving when drilling a hole and is applicable both in the home and professionally.

It is difficult in both professional building work and DIY to drill holes, at least on the surface, with entry orifices of a precise size and shape, especially in hard, tough materials such as ceramics, clayware, stone, metal, etc., since the tip of the bit tends to move away from the point of application. This movement is essentially caused by applying the bit at an angle other than the perpendicular to the surface to be drilled and by the reaction to the torque as applied by the drilling machine, as well as by the generally slippy nature of the material to be drilled.

### PRIOR ART

Craft procedures for endeavouring to solve this problem are known to professionals and DIY fans, for example, by placing a piece of adhesive tape over the area to be drilled and so prevent the point of application or support of the tip of the bit sliding. Apart from giving highly imperfect results, these methods are time consuming.

As far as the applicant is aware, there are currently no devices allowing this problem to be adequately solved and holes with entrance orifices perfectly fitting the size of the drill bit used to be drilled.

### OBJECT OF THE INVENTION

From the foregoing, it results that there is a current need to totally or partially solve the problem raised. This is where the invention comes in, it starts from the idea that in order to drill holes with entrance orifices of a size and shape fitting the drill bit size, on the one hand, the bit must be applied onto the surface to be drilled in an exact position on the perpendicular to such surface and, on the other, the bit must not be allowed to move laterally whilst drilling the hole, especially until a significant length of the bit has penetrated into the material to be drilled.

It is a task of the invention to develop a tool of the type indicated above, which will also be easy and safe for the user to use and operate.

According to the invention, this task is undertaken through a tool as per the characteristics of claim 1. Other additional characteristics of the invention are given in the dependent claims.

According to the invention, the anti-sliding hand held guide tool is characterised in that comprises:
- an essentially rigid hand held part in the shape of a cylindrical piece with a grip surface and a central cylindrical borehole extending along the whole axis, as well as multiple cylindrical boreholes of different sizes extending parallel around the said central cylindrical borehole, and
- a support part for supporting on the surface to be drilled made of a anti-sliding and elastic to compression material; and
- said hand held part and support part are solidly joined together, especially against rotation.

According to a preferred embodiment of the invention, the support part is disc shaped, with approximately the same diameter as the hand held part, and has a central cylindrical borehole extending along the whole of its axis and multiple cylindrical boreholes of different sizes extending parallel around the said central cylindrical borehole and the hand held part has a perimetral lip at one of its ends which extends perpendicularly upwards from the said end to take and secure the said support part so that a small portion of the latter protrudes from the hand held part in order to support against the surface to be drilled, with the respective groups of cylindrical boreholes exactly aligned to delimit holes for inserting a bit in drilling machine.

In a further preferred embodiment of the invention, the said support part is provided as a piece generally in the shape of a ring and the hand held part is formed at one of its ends with a lip extending outwards in a radial direction, on which lip the said support part ring shaped is fully supported and secured. This embodiment proves particularly appropriate for use with "widia" headed drill bits, since the surroundings of the orifices of elastic support part are prevented from wearing.

According to an additional characteristic, it is advisable, according to the invention, for the entrance orifices of the cylindrical boreholes of the hand held part to be countersunk in order to facilitate inserting the drill bit and to also have marks indicating the applicable drill bit size.

According to another characteristic of the invention, it proves particularly advantageous for the latral surface of the hand held part to have a non-slip finish, such as knurling, a synthetic coating or even with an anatomical configuration fitting the hand of the user, for example, forming the hand held part with a side surface made up of an intersection of multiple cylindrical segments with axis parallel to the axis of the said cylindrical part.

Still according to a further characteristic of the invention, the hand held part has a handle or grip which extends approximately perpendicular therefrom.

It must be made clear that in the context of the invention, the term rigid or essentially rigid of the hand held part indicates that it is a piece made of metal, plastic or another sufficiently strong material with an essentially stable mechanical structure, whilst the terms anti-sliding and elastic o resilient as applied to the support part indicate materials that have a certain property of surface adherence, which may elastically deform to compression, such as, for example, silicon, rubber or synthetic rubber.

### BRIEF DESCRIPTION OF THE FIGURES

Other characteristics and advantages of the invention will prove clearer from the following description, made with the aid of the attached drawings of non limiting examples of an embodiment, in which:
Figure 1 shows a perspective view of an exploded tool according to the invention.
Figures 2A and 2B show in similar fashion perspective views of the assembled tool from figure 1 from in front and from behind.
Figure 3 shows the tool of the invention fitted with a handle or grip for the user.
Figure 4 illustrates the use of the tool according to figures 1 to 3.
Figure 5 shows a perspective view in an exploded state of a tool according to another embodiment of the invention.
Figures 6A and 6B show in a similar fashion perspective views of the now assembled tool from figure 5 from in front and from behind.
Figure 7 illustrates a form of using the tool according to the embodiment of figures 5 and 6.

### DETAILED DESCRIPTION OF AN EMBODIMENT

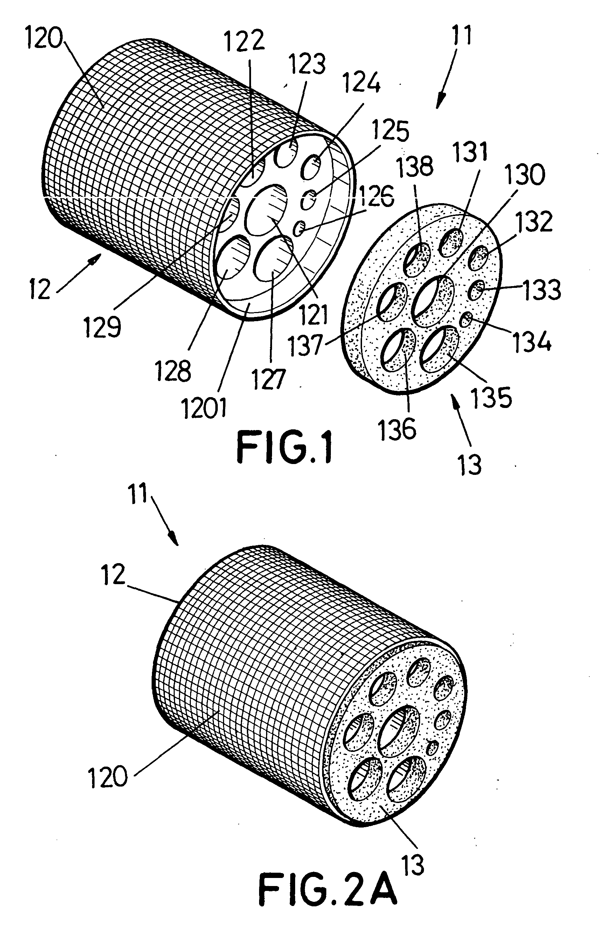

As shown by figures 1 to 3, in a first preferred embodiment, the tool according to the invention designated in general by numerical reference 11, consists of a hand held part 12 in the shape of an essentially riqid cylindrical piece to be gripped by the user, and of a support part 13 to be supported against the surface to be drilled.

The hand held part 12 has a central cylindrical borehole 121 extending through the axis of the cylinder and multiple cylindrical boreholes 122-129 of different sizes extending parallel around the said central cylindrical borehole 121; in the same way, the support part 13, in the shape of a low cylinder, i.e., essentially disc shaped, has a central cylindrical borehole 130 along its axis and multiple cylindrical boreholes of a different size 131 to 138 around the central cylindrical borehole 130, with the size and number of both groups of cylindrical boreholes facing each other the same.

The hand held and support parts 12 and 13 are securely joined together forming a solid whole through a lip 1201 extending perpendicularly upward from one end of the hand held part 12. According to the invention, it is important to ensure these two parts are secured, particularly against rotation, so as to thus guarantee perfect alignment of the respective cylindrical boreholes of both guides which form holes for inserting the bit B, so that such join may be provided in the manner proving most advantageous and effective from the technical point of view, for example, by bonding, heat welding, etc.

It must here be understood that the sizes of the boreholes for the bits are slightly larger than the applicable bit sizes in order to allow the bit to turn without rubbing on the walls of the said holes.

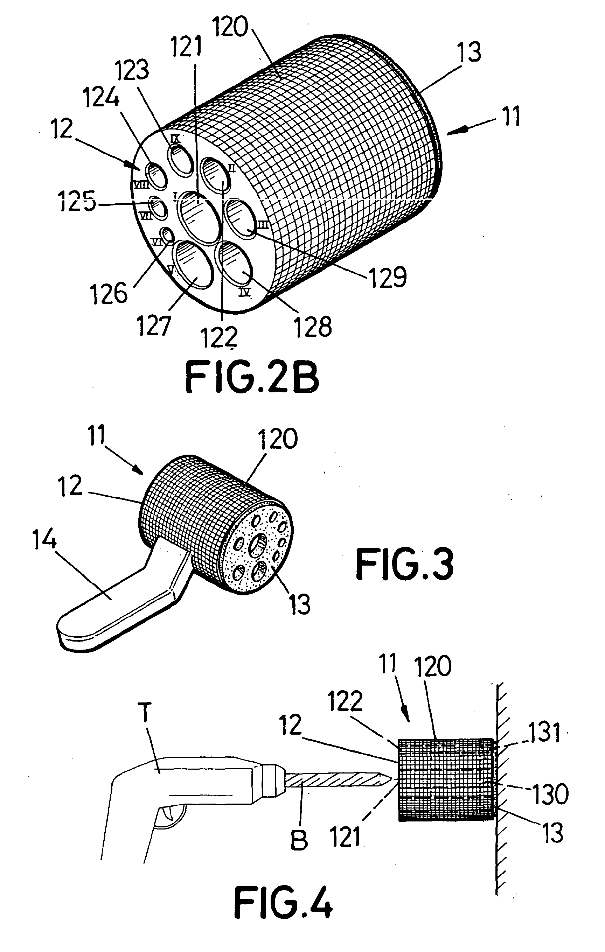

As can be seen particularly clearly in figure 2B the entrance orifices of cylindrical boreholes 121 to 129 of hand held part 12 are suitably countersunk to facilitate the drill bit entering and they also have marks I to IX to indicate the size of the applicable bit.

According to the invention, it proves particularly advantageous for the hand held part 12 to be given a surface finish 120, for example, knurling or a non-slip coating.

It may also be advisable according to the invention, as illustrated by figure 3, for the hand held part 12 to be fitted with a handle or grip 14 for the user, which protrudes essentially perpendicular from the said hand held part 12.

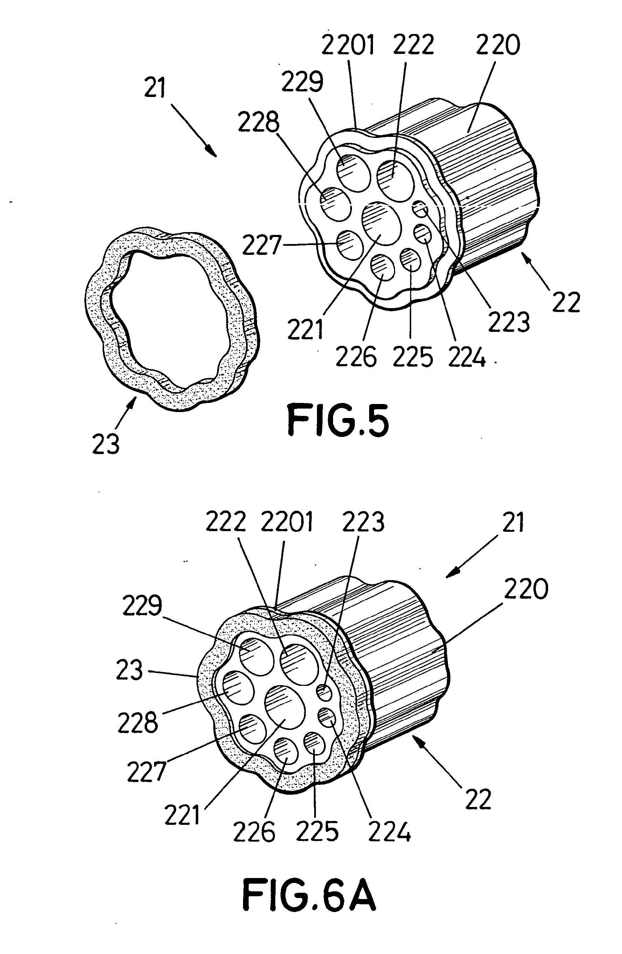

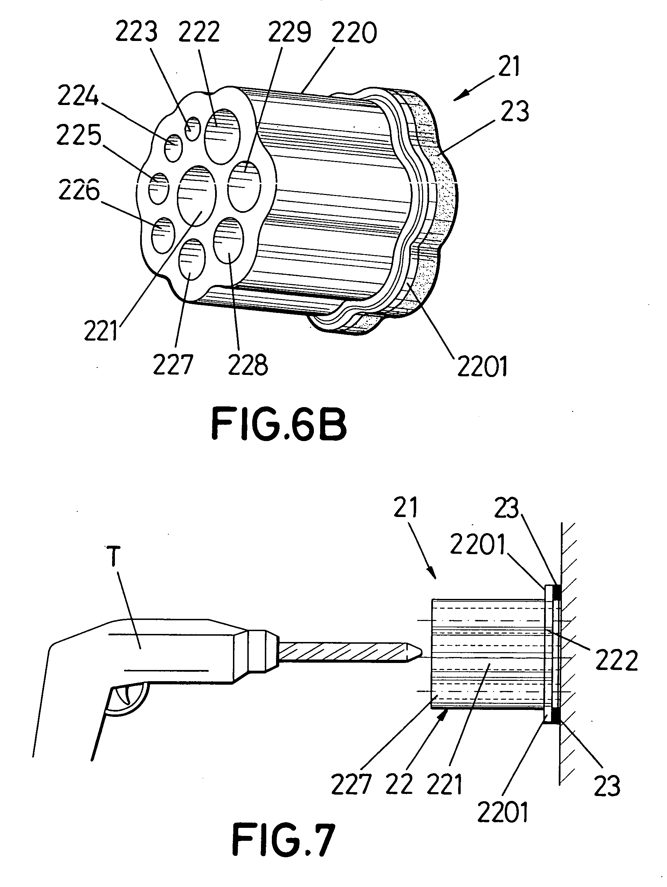

Another form of preferred embodiment of the invention is shown in figures 5, 6A and 6B which is particularly appropriate, as mentioned earlier, to be used with a "widia" headed type drill bit. Here, the tool, according to the invention, which is designated in general by numerical reference 21, consists in a hand held part 22 in the form of an essentially rigid cylindrical piece to be gripped by the user, and of a support part 23 of a anti-sliding elastic material to be supported against the surface to be drilled.

The hand held part 22 has a central cylindrical borehole 221 extending along its axis and multiple cylindrical boreholes 222-229 of different sizes extending parallel around the said central cylindrical borehole 221, whilst the support part 23 takes on a low tube shaped configuration, i.e., essentially ring shaped.

The hand held and support parts 22, 23 are securely joined to each other forming an interlocked whole, through a lip 2201 provided at one end of the hand held part 22, which extends outwards in a radial direction.

As was already mentioned in connection with the foregoing embodiment, it must be understood that the sizes of the holes for the drill bits are slightly larger than the sizes of the drill bit applicable so as to allow the bit to turn without rubbing on the walls of the said holes, enabling the slightly wider tip for the event of a "widia" type drill bit to pass through.

As can be seen particularly clearly in figure 6A, the entrance orifices of cylindrical boreholes 221 to 229 of hand held part 22 are suitably countersunk to facilitate the drill bit entering and they can also bear marks to indicate the applicable drill bit size.

According to the invention, it proves particularly advantageous for the hand held part 22, to be formed with a certain anatomical arrangement by an intersection of cylindrical portions with axis parallel to the geometric axis of the said hand held part 22, so that it fits the hand of the user particularly well and thus guarantees steady holding.

As can be seen in the drawings of figures 4 and 7, in order to make a drill hole in a wall using a drilling machine T, the tool 11, 21, is supported through its support part 13, 23 against the surface to be drilled, the bit B is inserted into the borehole chosen according to its size, the user then firmly grips the hand held part 12, 22 with his hand and operates the drilling machine T, so that, on the one hand, the application of the bit B is guaranteed to be perfectly perpendicular to the surface to be drilled whilst the said bit is prevented from moving sideways by the pressure exerted through the hand held part 12, 22 and by the anti-sliding and elastic nature of the support part 13, 23. Once the drill reaches a suitable depth, the tool 11, 21 can be removed and drilling continue in a conventional way.

Now that the object of the invention has been sufficiently described, it only remains to point out that embodiments deriving from changes in shape, dimensions, materials and similar, as well as that resulting from a routine application of what has been disclosed above, must be deemed as included in its field so that the invention will only be restricted by the scope of the following claims.

## Claims

1. Anti-sliding hand held guide tool for drilling holes with drilling machine, **characterised in that** this tool (11, 21) comprises:
- a rigid hand held part (12, 22) in the shape of a cylindrical piece, which has a grip surface (120, 220) and a central cylindrical borehole (121, 221) extending along the whole of its axis, as well as multiple cylindrical boreholes (122-129, 222-229) of different sizes extending parallel around the said central cylindrical borehole (121, 221),
- a support part (13, 23) for supporting on the surface to be drilled made of a anti-sliding and elastic to compression material, and
- said hand held part (12, 22) and support part (13, 23) are solidly joined together, especially against rotation.

2. Anti-sliding hand held guide tool as claim 1, **characterised in that** the support part (13) is disc shaped, with approximately the same diameter as the hand held part (12), and has a central cylindrical borehole (130) extending along the whole of its axis and multiple cylindrical boreholes (131 to 138) of different sizes extending parallel around the said central cylindrical borehole (130), and the hand held part (12) has a perimetral lip (1201) at one of its ends, which extends perpendicular upwards from the said end, to secure the said support part (13), so that a small portion of this support part protrudes from the hand held part to support against the surface to be drilled, with the respective groups of cylindrical boreholes of the said hand held and support parts exactly aligned to delimit holes for inserting a bit in drilling machine.

3. Anti-sliding hand held guide tool as claim 1, **characterised in that** the support part (23) is provided as a generally ring shaped piece and the hand held part (22) is formed with a lip (2201) at one of its ends, with a width approximately equal to the width of the support part, which extends outwards in a radial direction, on which lip the said ring shaped support part is fully fixed and secured.

4. Anti-sliding hand held guide tool as one of claims 1 to 3, **characterised in that** the entrance orifices of the cylindrical boreholes (121-129, 221-229) of the hand held part (12, 22) are countersunk to facilitate entry of the bit (B) and, in addition, have marks (I-IX) to indicate the applicable bit size.

5. Anti-sliding hand held guide tool as claims 1 to 4, **characterised in that** the lateral surface (120) of the hand held part has a anti-sliding surface finish, such as knurling, synthetic coating or even an anatomical configuration adapted to the hand of the user, shaping the lateral surface (130) by intersection of multiple cylindrical segments with axis parallel to the axis of the said cylindrical piece.

6. Anti-sliding hand held guide tool as claims 1 to 4, **characterised in that** the hand held part (12) has a handle or grip (14) extending approximately perpendicular therefrom.
